# EUROPEAN PATENT SPECIFICATION

(11) **EP 4 293 986 B1**
(45) Date of publication and mention of the grant of the patent: **29.01.2025**
(21) Application number: 23176563.7
(22) Date of filing: 31.05.2023
(51) Int. Cl.: H04L 65/1069, H04L 65/403, H04L 65/4061, H04W 4/06, H04L 9/40, H04W 4/42

(54) **A METHOD FOR GROUP CALL VIDEO TRANSMISSION CONTROL OF THE RAILWAY MCVIDEO SYSTEM**
VERFAHREN ZUR GRUPPENANRUF-VIDEOÜBERTRAGUNGSSTEUERUNG DES MCVIDEO-SCHIENENFAHRZEUGSYSTEMS
PROCÉDÉ DE COMMANDE DE TRANSMISSION VIDÉO D'APPEL DE GROUPE DU SYSTÈME MCVIDÉO FERROVIAIRE

(30) Priority: 14.06.2022 CN 202210668750
(43) Date of publication of application: 20.12.2023
(73) Proprietor: Signal & Communication Research Institute of China Academy of Railway Sciences Corporation Limited, Beijing (CN); China Academy of Railway Sciences Corporation Limited, Beijing 100081 (CN); Beijing HUA-TIE Information Technology Co., Ltd, Beijing (CN); Beijing Ruichi Guotie ITS Eng.&Tech.Ltd, Beijing (CN)
(72) Inventor: Guo, Qiangliang, Beijing (CN); Wang, Kaifeng, Beijing (CN); Yan, Xiaoyu, Beijing (CN); Fu, Wengang, Beijing (CN); Li, Chunduo, Beijing (CN); Wang, Cheng, Beijing (CN); Lin, Wei, Beijing (CN); Jiang, Zhiyong, Beijing (CN); Liang, Yiqun, Beijing (CN); Zhang, Yujin, Beijing (CN); Zhang, Zhihao, Beijing (CN); Li, Yi, Beijing (CN); Li, Xu, Beijing (CN); Bai, Xiaonan, Beijing (CN); Yang, Jufeng, Beijing (CN); Gao, Shangyong, Beijing (CN); Zhang, Xindan, Beijing (CN); Wang, Zuyuan, Beijing (CN); Wang, Yao, Beijing (CN); Han, Ce, Beijing (CN); Zhou, Xiaozhi, Beijing (CN); Jiang, Hongmin, Beijing (CN); Wang, Wenqiang, Beijing (CN); Tang, Maoshun, Beijing (CN); Wang, Qianru, Beijing (CN)
(74) Representative: Novagraaf Technologies

(56) References cited:
- WO-A1-2022/035195
- US-A1- 2017 374 109

## Description

### TECHNICAL FIELD

The Invention relates to the technical field of railway wireless communication, in particular to a method for group call video transmission control of the railway MCVideo system.

### BACKGROUND ART

As the research and promotion of railway mobile communication technology are continuously directed towards broadband and intellectualization, it has been determined that China's railways will adopt 5G-R to realize the next generation of railway mobile communication system.

International Organization for Standardization 3GPP Standard (The Third Generation Partnership Project) has successively introduced a series of standards based on mission critical communication mechanism: MCPTT (Mission Critical Push to Talk), MCData (Mission Critical Data) and MCVideo (Mission Critical Video), which are collectively called MCX (Mission Critical Service ), and they will become the main direction for cluster communication's further development. MCX technology meets the basic functional requirements of railway cluster communication and dispatch communication services, and has become a solution for domestic and foreign railway clustering and dispatching communications. Especially, the proposal of MCVideo communication technology will greatly improve the visualization and intellectualization level of railway communication.

The Chinese invention patent application "A speaking right control method based on MCVideo cluster system", with publication number CN109756851A, realized the speaking right control based on MCVideo Cluster System, but did not introduce how to control video transmission in detail. The Chinese invention patent "Method for managing MCVIDEO communication in off-network MCVIDEO Communication System", with the number of announcement of grant of patent right CN109792565B, introduced the direct video communication method between different MCVideo terminal devices without the support of MCVideo server under off-network condition, but did not introduce the video transmission control method during group call. Beijing Jiaotong University's 2020 paper "Research and Implementation of MCVideo Video Transmission Function in Broadband Clustering Switching System" introduced the method of video transmission right control in MCVideo broadband cluster switch system, but did not control the category permissions of different MCVideo terminal users. In addition, in general, the above schemes are all based on 3GPP standards.

However, the group call and video transmission control under MCVideo system introduced by 3GPP are mainly for public safety network, while the exclusive and particular railway mobile communication network is to some degree different from public safety network. In addition, the application scenarios of railway Clustering communication and dispatch communication services are too special for the MCVideo mechanism in 3GPP standard to apply.

US 2017/0374109 describes a wireless device that transmits, to a second wireless device via an internet protocol multimedia subsystem (IMS) network entity, a session initiation protocol (SIP) invitation. The SIP invitation may comprise a session description protocol (SDP). The SDP may comprise a media type and one or more attributes. The media type may identify a protocol for controlling operational orders. The controlling operational orders may comprise at least: mechanical operational orders; and electrical operational orders. The one or more attributes may identify a format of the protocol to establish a SIP session. The wireless device may receive, from the second wireless device via the IMS network entity, a SIP confirmation for the SIP session. The wireless device may control the second wireless device employing the controlling operational orders identified by the media type.

WO2022035195 relates to a communication method and system for converging a 5th-Generation (5G) communication system for supporting higher data rates beyond a 4th-Generation (4G) system with a technology for Internet of Things (IoT). The disclosure may be applied to intelligent services based on the 5G communication technology and the IoT-related technology, such as smart home, smart building, smart city, smart car, connected car, health care, digital education, smart retail, security and safety services. In the disclosure, a system and a method to handle media transmission in the Mission Critical (MC) systems or MC Video system are provided. According to the system and the method, wastage of network resources can be avoided and other participants in the group can be given chance to transmit important data as maximum number of transmissions at a time in a group call are limited by network capacity. Accordingly, efficiency of the MC Video system can be improved.

### CONTENTS OF INVENTION

The purpose of the present Invention is to provide a method for group call video transmission control of the railway MCVideo system, which can meet the permissions control requirements of various user terminals in the application scene of railway Clustering communication and dispatching communication services, is beneficial to more reasonable application of railway private network resources, and can ensure the feasibility, controllability and high efficiency of video transmission in railway video group calling.

The invention relates to a method, as further defined in claim 1, for group call video transmission control of a railway Mission Critical Video, MCVideo, system.

According to the technical proposal provided by the Invention above, it can be seen that different kinds of video transmission permission can be respectively configured for different types of user terminals according to the characteristics and application strategies of the user terminals, based on this, a more perfect method of video transmission control, transmission notice and receipt control (collectively referred to as video transmission control method) is proposed; through the user video transmission permission configuration and video transmission control method, the application requirements of railway clustering and dispatching communications are greatly satisfied, and the efficiency of command and communication are improved.

### BRIEF DESCRIPTION OF THE DRAWINGS

In order to explain the technical scheme of the embodiments of the present Invention more clearly, the appended drawings to be used in the description of the embodiments will be briefly described below. It is obvious that the drawings described below are only some embodiments of the present Invention, and other drawings can be obtained from these drawings without any creative effort by those of ordinary skill in the art.
Fig. 1 is a flowchart of a method for group call video transmission control of the railway MCVideo system provided by the embodiment of the present Invention;
Fig. 2 is a flowchart of video transmission permission configuration of the user terminal provided by the embodiment of the present Invention;
Fig. 3 is a flowchart of video sending control processing provided by the embodiment of the present Invention;
Fig. 4 is a flowchart of video sending notice processing provided by the embodiment of the present Invention;
Fig. 5 is a flowchart of video sending terminating notice processing provided by the embodiment of the present Invention;
Fig. 6 is a flowchart of video receipt control processing provided by an embodiment of the present invention;
Fig. 7 is an encoding format of a functional number field provided by the embodiment of the present Invention;
Fig. 8 is a flowchart of the processing strategy for a user receiving multi-channel video provided by the embodiment of the present Invention;
Fig. 9 is a flowchart of video receiving control processing between multiple MCVideo systems provided by an embodiment of the Invention;

### SPECIFIC MODE FOR CARRYING OUT THE INVENTION

A clear and complete description of the technical scheme of the embodiments of the Invention will be given below in conjunction with the appended drawings in which the embodiments of the present Invention are described, and it will be apparent that the described embodiments are only part of, and not all of, the embodiments of the Invention. Based on the embodiments of the present Invention, all other embodiments obtained by those of ordinary skill in the art without making creative efforts fall within the protection scope of the present Invention.

First, the terms that may be used in this article are explained as follows:
The terms "involving", "including", "containing", "having" or other descriptions with similar meanings shall be construed as non-exclusive inclusion. For example, involving a technical characteristic element (such as raw material, constituent, ingredient, carrier, dosage form, material, size, part, component, mechanism, device, step, process, method, reaction condition, processing condition, parameter, algorithm, signal, data, product, etc.) should be interpreted as including not only a technical characteristic element explicitly listed, but also other technical characteristic elements well known in the art that are not explicitly listed.

Railway MCVideo system group call video transmission control method provided by the present Invention is described in detail below. Content not described in detail in the embodiments of the present Invention is the prior art well known to those skilled in the art. Where specific conditions are not specified in the embodiments of the present Invention, implementations shall be performed according to the conventional conditions in the art or the conditions recommended by the manufacturer. For instruments used in the embodiment of the present Invention, if manufacturer is not indicated, are conventional products available in market.

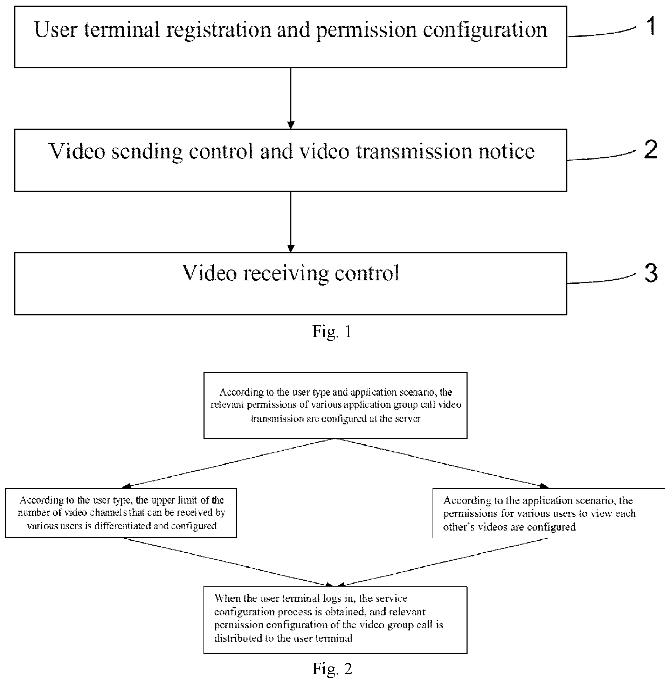

As shown in Fig. 1, A method for group call video transmission control of the railway MCVideo system mainly comprises the following steps:
Step 1. When a user terminal's registration request is received, the MCVideo server configures a corresponding permission for the user terminal according to the category of the user terminal.

In the embodiment of the present Invention, the preferred embodiment of configuring the corresponding permission for the user terminal according to the category of the user terminal is described as follows:
1) The user terminal is categorized into three categories, namely, mobile terminal, wired fixed terminal and monitoring equipment.
2) The upper limit of video channels which can be received by the user terminal of each category is configured, and sequentially the upper limits of the mobile terminal, the wired fixed terminal and the monitoring equipment are set up as N1, N2 and N3, and satisfied N2 >N1 >N3.
3) The permissions of viewing each other's videos among the user terminals of each category is configured, including the user terminal of the mobile terminal category has the permission to view the videos of the user terminals of other categories (including its own category) except the user terminals of the wired fixed terminal category, the user terminal of the wired fixed terminal category has the permission to view the videos of user terminals of all categories (including its own category), and the user terminal of the monitoring equipment category has no permission to view the videos of any type of user terminals.

In the embodiment of the present Invention, all the members in the video group call are user terminals, and different role names are given to the user terminals according to the actions of video sending and video receiving of the user terminals. For example, the user terminal sending video in the video group call is called the video sender, and the user terminal receiving video is called the video receiver. The roles of the video sender and the video receiver can be interchanged, for example, the user terminal A sent video at the last moment, then it acts as the video sender; at the next moment the user terminal A receives the video, it acts as the video receiver.

Step 2. when the MCVideo server receives the sending video request from the video sender, it verifies the video sender and the sending video request, returns the response message carrying the SSRC number assigned to the video sender to the video sender after passing the verification, and receives the video stream sent by the video sender; at the same time, the relevant information of the video sender is sent to other user terminals in the video group call where the video sender is located; The SSRC number aforesaid represents the synchronization source number.

In the embodiment of the present Invention, when the video group call is just established, the initiator of the group call actively sends its own video, and other members in the group actively receive the video of the initiator, at this time, the process is automatically completed and does not need to be intervened by the user terminal. The process of video group call establishment is as follows: (1) A user terminal wants to initiate a video group call, and sends a video group call initiating request to the MCVideo server by dialing the group call number, and this user terminal is the initiator of the group call; (2) After receiving the video group call request, the MCVideo server connects the call, and adds other members in the group into the group call one by one, and then the video group call is established.

In the process of video group call, when the video sender requests to send local videos, the MCVideo server needs to verify the video sender and the sending video request to decide whether to allow the relevant request. The verified content may include whether the video sender is in the video group call, whether the format of the sending video request is correct, and whether the video sender has a video being sent. If the video sender is in the video group call, with correct format of sending video request, and has no video being sent, then it passes the verification, otherwise, it fails; after passing the verification, the video sender is allowed to send the video, and has a corresponding SSRC number assigned; if the verification fails, the video sender is refused to send the video; the MCVideo server correspondingly returns a message to the video sender according to the verification result, and then instructs the video sender to or not to send the video stream. In addition, while the MCVideo server above is receiving the video stream sent by the video sender, if it receives the request of terminating video sending from the video sender, it verifies the video sender and the request of terminating the video sending. Similar to the previous, the verified content can include whether the video sender is in the video group call, whether the format of the video request is correct, and whether the video sender has a video being sent. If the video sender is in the video group call, with correct format of the video request to terminate sending, and there is a video being sent, then it passes the verification, otherwise, it fails. After passing the verification, the response message allowing to terminate sending is returned to the video sender.

In addition, after receiving the video stream sent by the video sender, the MCVideo server aforesaid also sends the relevant video transmission notice to each user terminal, so as to inform other user terminals in the video group call of the current state change of the video sender. Specifically, the MCVideo aforesaid server sends the relevant information of the video sender (for example, the user terminal's user name, SSRC number, functional number, etc.) to other user terminals in the video group call where the video sender is located, and the other user terminals display it in a list, so that the video stream to be received can be selected according to needs; afterwards, when a new user terminal joins in the video group call, the relevant information of the video sender is sent to the new user terminal. When the MCVideo server aforesaid receives the request of terminating sending video sent by the video sender and allows the video sender to terminate video sending, or after the video sender exits the video group call, the MCVideo server aforesaid sends a video sending terminating notice to other user terminals in the video group call.

Step 3. when the MCVideo server receives the video receiver's request of receiving a designated video sender's video, the MCVideo server carries out verification in combination with the video receiver's permission, returns the response message of allowing the receipt to the user terminal after passing the verification, and sends the video stream of the designated video sender to the video receiver.

As described earlier, the members of the video group call are informed of video stream information of each member in the video group call through video transmission notice, so that the video stream by a designated video sender can be received as needed. Similarly, after receiving the relevant request from the video receiver, the MCVideo server needs to verify in combination with the video receiver's permission. In addition to verifying in combination with the permission items configured in Step 1 (for example, verifying whether the number of video channels received by the video receiver reaches the upper limit and whether there is the permission to view the video of the designated video sender), the MCVideo server also needs to verify the identity of the video receiver and the content of request (for example, verifying whether the video receiver is a member of the video group call, whether the format of the request of receiving the designated video sender's video is correct, etc.), if the requirements of permission of configuration in Step 1 are satisfied, it is the video group call member, with correct format of the request of receiving the designated video sender's video, the verification is passed; otherwise, the verification fails; according to the verification result, a response message of allowing the receipt or not refusing the receipt is fed back to the video receiver. If the receipt is allowed, the video stream of the designated video sender is sent to the video receiver. While the MCVideo server is sending the video stream of the designated video sender to the video receiver, if the request of video receiving termination from the video receiver is received, the video receiver and the video receiving termination request are verified, for example, whether the video receiver is a member of the video group call, whether the format of the request of video receiving terminating is correct, and whether the video receiver currently has the video being received; if the video receiver is a member of the video group call, with correct format of the request of video receiving terminating, and there is currently a video being received, the verification is passed, otherwise, the verification fails; after the verification is passed, the response message allowing to terminate receiving is returned to the video receiver.

In order to facilitate understanding, the following four parts are further introduced: user terminal video transmission permission configuration, video sending control, video transmission notice, and video receiving control.

### 1. User Terminal Video Transmission Permission Configuration.

According to user characteristics and application strategies, MCVideo Server assigns different kinds of video transmission permission to different categories of user terminals when establishing a video group call. As shown in Fig. 2, it mainly includes:
1) According to the characteristics and application scenarios of user terminals, the permission configuration is carried out in the user configuration database of the MCVideo server. According to the railway dispatch communication service scenario, the user terminals of the mobile terminal category is set as the first type of users, such as vehicle-mounted radiophone CIR and handheld radiophone users; the user terminals of wired fixed terminal category is as the second type of users, such as dispatcher and station watchman; the user terminals of monitoring equipment category is as the third type user, such as camera and etc.
2) The upper limit of video channels which can be received by various user terminals is configured. The upper limit of video channels which can be received by the first category of users is set as N1, that can be received by the second category of users is set as N2, and that can be received by the other third category users is set as N3; exemplary, N1=1, N2=4, and N3=0 can be set.
3) The permission for user terminals to view each other's video is configured. Exemplary, it can be set that a first category user can view videos of other users except the second category user, the second category user can view videos of all user types, and the third category user cannot view any user's video.
4) The video transmission permission configuration is issued to the user terminal. When the terminal registers and logs in the server to obtain the user configuration file, the above video transmission permission is sent to the terminal as the initial configuration of the video transmission control. The permission configuration is controlled by the MCVideo server and sent to the user terminal, only for informing the user terminal, and the user terminal can make preliminary discrimination locally during the subsequent request process, but the final decision belongs to the MCVideo server.

### 2. Video Transmission Control.

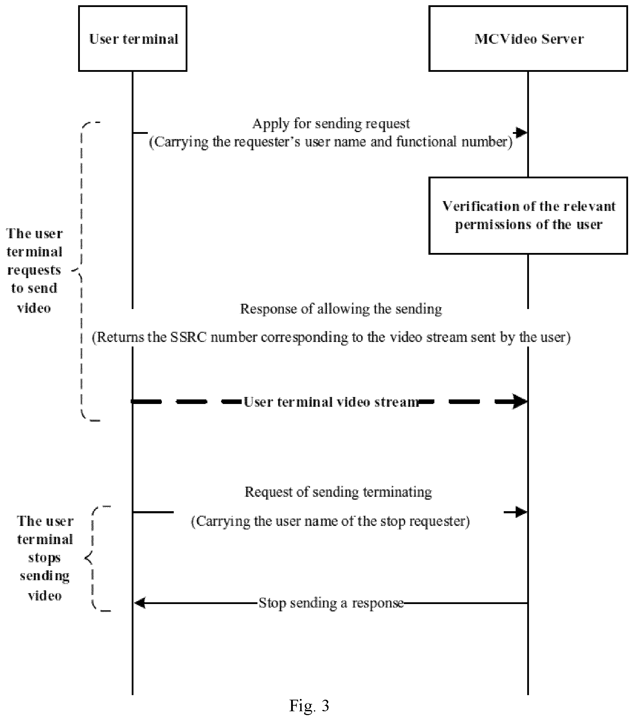

Each user terminal and the MCVideo server send control messages through video to realize the process that each user terminal uploads local video to the MCVideo server. Of course, in this stage, the user terminal sending video is the video sender. Considering that the names of video sender and video receiver are mainly used to distinguish the roles of different user terminals, but this stage only involves the role of video sender, therefore, in the introduction of this part, the name user terminal is still used. As shown in Fig. 3, it mainly includes:
1) The user terminal sends a sending video request to the MCVideo server and carries its own user name and functional number (if any).
2) The MCVideo server receives the sending video request, verifies the relevant permission (that is, verifies whether the video sender is in the video group call, whether the format of the sending video request is correct, and whether the video sender has the video being sent), and if the verification passes and permission is granted, it sends a video sending permission response to the user terminal, and carries the SSRC number assigned to the user terminal when the video stream is sent; if the verification fails, a transmission refusal response is sent to the user terminal.
3) After the user terminal receives the sending permission response, the user terminal starts sending the local video to the MCVideo server; sending is not permitted after sending refusal response is received.
4) If the user terminal which is already sending the video wants to terminate sending video, it needs to send a request of video sending termination to the MCVideo, and carry the user name and functional number of the requester (if any).
5) The MCVideo server receives the request for terminating sending video, verifies the relevant permission (i. e. verifies whether the video sender is in the video group call, whether the format of the request for terminating sending video is correct, and whether the video sender has the video being sent), and if the verification passes the permission, it sends the permission to terminate response to the user terminal.
6) After the user terminal receives the response of terminating permission, the video sending is terminated.

### 3. Video transmission notice.

The MCVideo server informs other users of the current state change of the video sender by sending relevant video transmission notice to each user terminal.
1) When the MCVideo server allows a video sender to send video, it needs to send a video sending notice to other user terminals in the group, informing of the information of the current optional video sender, including user name, media stream SSRC number and functional number (if any). After receiving the notice, the other user terminals display the notice on the relevant list for receiving such user's video later.
2) The group call has been established. When a new user terminal is added, the MCVideo server needs to actively send a video sending notice to the new user terminal, informing of the information of the current optional video sender, including user name, SSRC number and functional number (if any).
3) When the MCVideo server allows a video sender to terminate sending video, it is necessary to send a video sending terminating notice to other user terminals in the group, informing of the information terminated by the video sender already, including user name, SSRC number and functional number (if any).
4) When a video sender who is sending video hangs up and exits the group call, the MCVideo server needs to send a video sending terminating notice to other user terminals in the group, informing of the information terminated by the video sender already, including user name, SSRC number and functional number (if any).

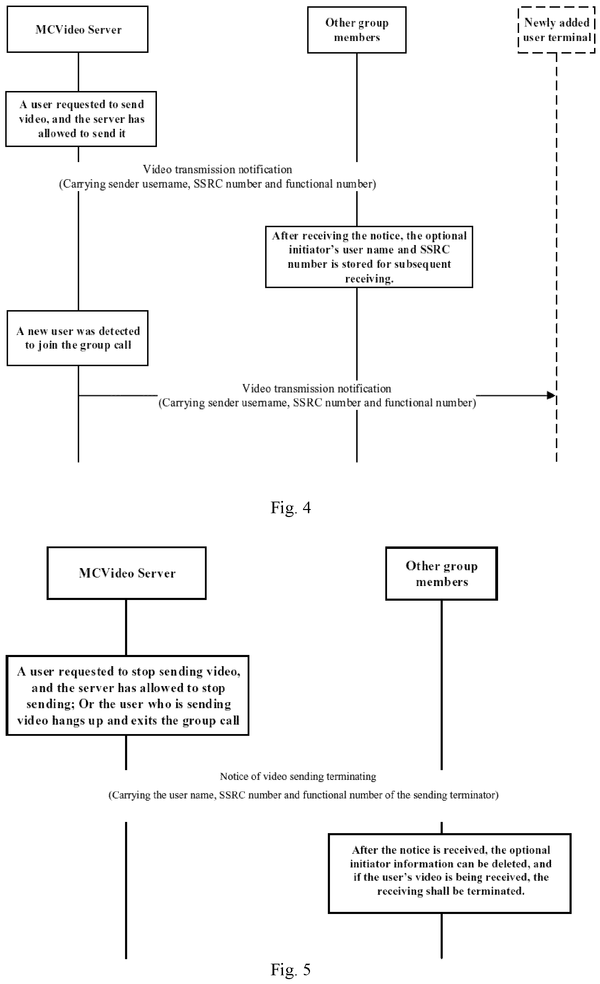

As shown in fig. 4, it is a flowchart of processing video sending notice. As shown in fig. 5, it is a flowchart of processing video sending terminating notice.

### 4. Video Receiving Control.

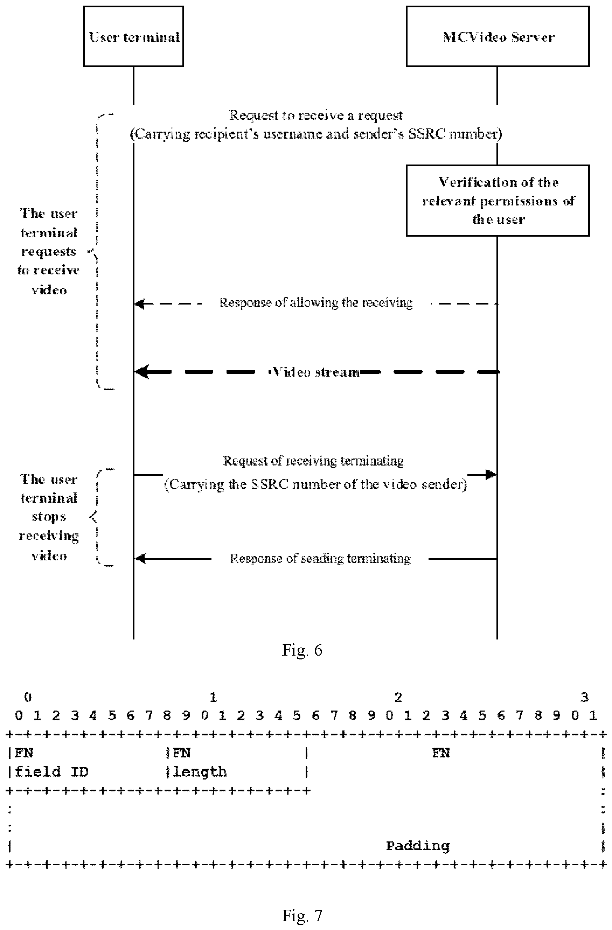

Each user terminal and MCVideo server use video receiving control to realize the process of each user receiving other user's video from the MCVideo server. As shown in Fig. 6, it mainly includes:
1) The user terminal (the video receiver) sends a request for receiving a video from a designated video sender to the MCVideo server, carrying the video receiver's user name and SSRC number.
2) After receiving the request, the MCVideo server verifies the relevant permission, and if the verification passes and permission is granted, it sends the receiving permission response to the video receiver, and then starts to forward the video stream to the video receiver; If the verification fails, a receiving refusal response is sent to the video receiver.
3) After receiving the receipt permission response, the video receiver starts to receive video.
4) If a video receiver who is already receiving the video wants to terminate video receiving, or receives a notice that the designated video sender has terminated sending, the video receiver needs to send a request of video receiving terminating to the MCVideo and carry the SSRC number of the designated video sender.
5) The MCVideo server receives the request of video receiving terminating, verifies relevant permission, and if the verification passes and permission is granted, it sends the receiving terminating permission response to the video receiver, and terminates forwarding the specified video stream to the video receiver.
6) The video receiver terminates the video receiving after receiving the response allowing the receiving terminating.

On the basis of the above video transmission control method, the present Invention also provides a functional number transmission method of the video transmission control process, a processing strategy for user terminal receiving multi-channel video, and a multi-MCVideo system video transmission control method.

### 1. Functional number transmission method of the video transmission control process.

Functional Number (FN) is a number defined according to the function of the position, or role of the user terminal, it is an important user identification in railway dispatch communication services. The standard 3GPP MCVideo video transmission control has not covered functional number information. According to the specific application requirements of railway dispatch communication, the functional number information is added to the video transmission control information, to help each user accurately grasp the source of specific role of the video stream, and it will improve the command communication efficiency greatly. Therefore, the video transmission control method above carries the functional number of the user terminal corresponding to the due video sender, specifically, the 1) and 4) parts of the video transmission control aforesaid and the 1) to 4) parts of the video transmission notice.

Fig. 7 shows the encoding format of the functional number field, which mainly includes: the functional number field ID (FN field ID), the functional number length (FN length) and the functional number (FN).
1) The FN field ID is used to mark the functional number field identification, which is generally a binary value; exemplary, distinguished from a specific field ID that has been defined by standard 3GPP MCVideo video transmission control the FN field ID has a decimal value of 021 and a binary value of 00010101.
2) The FN length is used to mark the length of the FN of the functional number, which is generally a binary value to mark the length of < FN >, but does not include the length of the blank padding and filling field.
3) The FN contains the specific content of the functional number, which is generally a character string corresponding to the functional number.

Generally speaking, if the length of the FN of the functional number is not (2+multiples of 4) bytes, the Padding is (2+multiples of 4) bytes, the value of the Padding byte is 0, and the Padding byte is ignored by the receiver.

In the embodiment of the present Invention, the number of functional numbers of the user terminal is one or more, and when the number is more than one, only the functional number with the highest priority is carried; the priority order is: train number functional number > locomotive functional number > carriage number functional number > other functional number; wherein, the other functional numbers represent functional numbers of other categories except train number functional number, locomotive functional number and carriage number functional number.

### 2. The processing strategy for user terminal's receives multi-channel video.

In the video group call, the user terminal (the video receiver) can receive multiple channels of videos from other user terminals (the video senders), and the video users received by each user terminal are not uniform. In the video group call process, the video selected by each user terminal may change, that is, the video selected by each user terminal is determined by the user terminal itself. Therefore, if the MCVideo server realizes the processing work of synthesizing multi-channel videos requested by each user terminal into one channel video, the video processing load of the MCVideo server is easy to be high due to the different video synthesis strategies of different user terminals, and the real-time performance of video transmission is likely to be greatly affected.

In the embodiment of the present Invention, it is proposed that each user terminal realizes the multi-channel video display work, namely, the MCVideo server maintains the video transmission control decision and forwards the corresponding video stream to each user terminal according to the strategy, and each user terminal completes the processing of multi-channel video received by itself. Wherein, the key point is that the MCVideo server uniformly controls and distributes the SSRC number of the video stream of each user terminal, and each user terminal requests and distinguishes other users' video streams through SSRC.

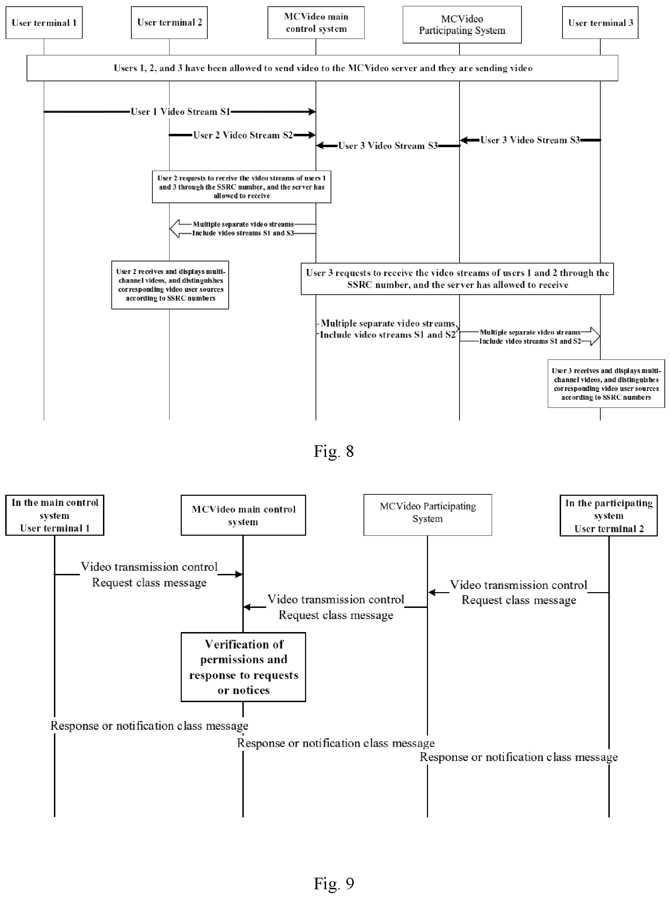

As shown in fig. 8, the principle of the strategy to process multi-channel video received by a user terminal is shown. Different SSRC numbers are assigned to different video senders by MCVideo server, and video receivers distinguish different video senders according to SSRC numbers. After receiving video streams from different video senders, the sources of different video streams are distinguished according to SSRC numbers.

### 3. Multi-MCVideo System Video Transmission Control Method.

In the embodiment of the present Invention, when the user terminal in the video group call belongs to multiple MCVideo systems, the MCVideo system to which the video group call belongs is taken as a main control system, and other MCVideo systems are taken as participating systems; the MCVideo server in the main control system is responsible for receiving the request from the video sender and the video sender, and for feeding back the corresponding response message after the permission verification; the video sender and the video sender in the main control system asforesaid communicate directly with the MCVideo server in the main control system, and the video sender and the video sender in the participating system communicate with the MCVideo server in the main control system through the MCVideo server in the MCVideo system it belongs to. Fig. 9 shows the principle of video transmission control method in multi-MCVideo systems.

In the embodiment of the present Invention, the MCVideo system to which the video group call belongs refers to the MCVideo system used for managing the video group call. In the process of establishing the video group call, the MCVideo server of such MCVideo system is also responsible for adding each member (the user terminal) into the video group call, and stores all information configurations of the video group call, including group information and information of each member.

Through the above description of the embodiments, those skilled in the art can clearly understand that the above embodiments can be implemented by software or by means of software plus necessary general-purpose hardware platforms. Based on this understanding, the technical scheme of the above embodiments may be embodied in the form of a software product that may be stored in a non-volatile memory (which may be a CD-ROM, a U disk, a removable hard disk, etc.), including multiple instructions for causing a computer device (which may be a personal computer, a server, or a network device, etc.) to perform the methods described in the various embodiments of the present Invention.

The above is only a preferred embodiment of the present Invention, but the scope of protection of the present Invention is not limited thereto, and any changes or substitutions that can easily be figured out by those skilled in the art within the technical scope disclosed by the present Invention should be covered within the protection scope of the present Invention. Therefore, the scope of protection of the present Invention should be subject to the scope of protection of the claims.

## Claims

1. A method for group call video transmission control of a railway Mission Critical Video, MCVideo, system, comprising the following steps:
when a registration request of a user terminal is received by a MCVideo server, configuring a corresponding permission for the user terminal according to a category of the user terminal; wherein a user terminal sending video in a video group call is called a video sender, and a user terminal receiving video is called a video receiver;
when a sending video request is received by the MCVideo server from a video sender, verifying by the MCVideo server the video sender and the sending video request in combination with the corresponding permission of the video sender, returning by the MCVideo server a response message carrying a Synchronization Source, SSRC, number distributed to the video sender's video stream to the video sender after passing the verification, and receiving by the MCVideo server the video stream sent by the video sender; at the same time, sending by the MCVideo server relevant information of the video sender to other user terminals in the video group call where the video sender is located;
when a request to receive the designated video sender's video is received by the MCVideo server from a video receiver, verifying the video receiver and the receiving video request in combination with the corresponding permission of the video receiver; after passing the verification, returning a response message of allowing the receipt to the user terminal, and sending the video stream of the designated video sender to the video receiver.

2. The method for group call video transmission control of the railway MCVideo system according to Claim 1, wherein the configuration of corresponding permission for the user terminal according to the category of the user terminal comprises:
the user terminal is divided into three categories, namely, a mobile terminal, a wired fixed terminal, and monitoring equipment;
the upper limit of video channels which can be received by the user terminal of each category is configured, and sequentially the upper limit of the mobile terminal, the wired fixed terminal and the monitoring equipment are set up as N1, N2 and N3, and N2>N1 >N3;
the permission of viewing each other's videos among the user terminals of each category is configured, including that the user terminal of the mobile terminal category has the permission to view the videos of the user terminals of other categories (including its own category) except the user terminal of the wired fixed terminal category, the user terminal of the wired fixed terminal category has the permission to view the videos of the user terminal of all categories (including its own category), and the user terminal of the monitoring equipment category has no permission to view the video of any type of user terminals.

3. The method for group call video transmission control of the railway MCVideo system according to Claim 1, wherein the method further comprises:
in the process of receiving video stream sent by the video sender, if the request of video sending termination is received from the video sender by the MCVideo server, verifying the video sender and the request for video sending termination, and returning the response message allowing sending termination to the video sender after passing the verification.

4. The method for group call video transmission control of the railway MCVideo system according to Claim 1, wherein the method further comprises:
displaying in a list the relevant information of the video sender by the other user terminals; wherein the relevant information of the video sender includes: the user terminal's user name, SSRC number and functional number;
after that, when a new user terminal joins in the video group call, sending the relevant information of the video sender to the new user terminal; when a request of video sending termination sent by the video sender is received by the MCVideo server, allowing the video sender to terminate the video sending, or after the video sender exits the video group call, sending by the MCVideo server a video sending termination notice to other user terminals in the video group call.

5. The method for group call video transmission control of the railway MCVideo system according to Claim 1, wherein the method further comprises:
when the video stream of the designated video sender is sent by the MCVideo server to the video receiver, if the request of receiving termination sent by the video receiver is received, verifying by the MCVideo server the video receiver and the video request of receiving terminating, and returning the response message allowing the receiving termination to the video receiver after the verification is passed.

6. The method for group call video transmission control of the railway MCVideo system according to any of Claims 1 to 5, wherein the sending video request aforesaid and the relevant information of the video sender all carry the functional number of the user terminal corresponding to the video sender;
the functional number field of the user terminal includes: functional number field ID, functional number length and functional number; the functional number field ID is used to mark the functional number field name, the functional number length is used to mark the length of the functional number, and the functional number contains the specific content of the functional number.

7. The method for group call video transmission control of the railway MCVideo system according to Claim 6, wherein the number of functional numbers of the user terminal aforesaid is one or more, and when the number is more than one, only the functional number with the highest priority is carried;
the priority order is: train number functional number > locomotive functional number > carriage number functional number > other functional number; wherein, the other functional numbers represent functional numbers of other categories except train number functional number, locomotive functional number and carriage number functional number.

8. The method for group call video transmission control of the railway MCVideo system according to any of Claims 1 to 5, wherein the method further includes a strategy of processing multi-channel videos received by the video receiver, and the processing strategy includes the following:
distributing by the MCVideo server different SSRC numbers for different video senders, distinguishing by the video receiver thedifferent video senders according to the SSRC numbers, and the sources of different video streams according to the SSRC number after receiving video streams from the different video senders.

9. The method for group call video transmission control of the railway MCVideo system according to any of Claims 1 to 5, wherein the method further includes:
when the user terminal in the video group call belongs to multiple MCVideo systems, taking the MCVideo system to which the video group call belongs as a main control system, and taking other MCVideo systems as participating systems; taking the MCVideo server in the main control system as responsible for receiving the request from the video sender and a video sender in one of said participating systems, and for feeding back the corresponding response message after the permission verification;
direct communication of the video sender in the main control system with the MCVideo server in the main control system, and
communication of the video sender in the participating system with the MCVideo server in the main control system through the MCVideo server in the MCVideo system it belongs to.

## Patentansprüche

1. Verfahren zur Steuerung der Gruppenruf-Videoübertragung eines eisenbahnbezogenen Mission Critical Video-Systems (MCVideo-Systems), die folgenden Schritte umfassend:
wenn eine Registrierungsanforderung eines Benutzerterminals von einem MCVideo-Server empfangen wird, Konfigurieren einer entsprechenden Berechtigung für das Benutzerterminal gemäß einer Kategorie des Benutzerterminals; wobei ein Benutzerterminal, das in einem Videogruppenanruf Video sendet, als Videosender bezeichnet wird und ein Benutzerterminal, das Video empfängt, als Videoempfänger bezeichnet wird;
wenn der MCVideo-Server eine Anforderung zum Senden eines Videos von einem Videosender empfängt, Überprüfen des Videosenders und der Anforderung zum Senden eines Videos durch den MCVideo-Server in Kombination mit der entsprechenden Berechtigung des Videosenders, Zurückgeben einer Antwortnachricht durch den MCVideo-Server mit einer an den Videostream des Videosenders verteilten Synchronisierungsquellennummer (Synchronization Source number; SSRC number) an den Videosender nach erfolgreicher Überprüfung und Empfangen des vom Videosender gesendeten Videostreams durch den MCVideo-Server; gleichzeitiges Senden relevanter Informationen des Videosenders durch den MCVideo-Server an andere Benutzerterminals im Videogruppenanruf, bei denen sich der Videosender befindet;
wenn vom MCVideo-Server eine Anforderung zum Empfangen des Videos des angegebenen Videosenders von einem Videoempfänger empfangen wird, Überprüfen des Videoempfängers und der empfangenen Videoanforderung in Kombination mit der entsprechenden Berechtigung des Videoempfängers; nach erfolgreicher Überprüfung, Zurückgeben einer Antwortnachricht über das Ermöglichen des Empfangs am Benutzerterminal und Senden des Videostreams des angegebenen Videosenders an den Videoempfänger.

2. Verfahren zur Steuerung der Gruppenruf-Videoübertragung des eisenbahnbezogenen MCVideo-Systems nach Anspruch 1, wobei die Konfiguration der entsprechenden Berechtigung für das Benutzerterminal entsprechend der Kategorie des Benutzerterminals umfasst:
Das Benutzerterminal ist in drei Kategorien unterteilt, nämlich ein mobiles Terminal, ein kabelgebundenes Festterminal und Überwachungsgeräte;
die Obergrenze der Videokanäle, die vom Benutzerterminal jeder Kategorie empfangen werden können, wird konfiguriert, und die Obergrenze des mobilen Terminals, des kabelgebundenen festen Terminals und der Überwachungsausrüstung wird nacheinander als N1, N2 und N3 eingerichtet, wobei N2 > N1 > N3 ist;
die Berechtigung zum gegenseitigen Ansehen von Videos zwischen den Benutzerterminals jeder Kategorie wird so konfiguriert, dass das Benutzerterminal der Kategorie mobiles Terminal die Berechtigung zum Ansehen der Videos von Benutzerterminals anderer Kategorien (einschließlich der eigenen Kategorie) mit Ausnahme des Benutzerterminals der Kategorie kabelgebundenes festes Terminal hat, das Benutzerterminal der Kategorie kabelgebundenes festes Terminal die Berechtigung zum Ansehen der Videos von Benutzerterminals aller Kategorien (einschließlich der eigenen Kategorie) hat und das Benutzerterminal der Kategorie Überwachungsgerät keine Berechtigung zum Ansehen der Videos von Benutzerterminals jeglicher Art hat.

3. Verfahren zur Steuerung der Gruppenruf-Videoübertragung des eisenbahnbezogenen MCVideo-Systems nach Anspruch 1, wobei das Verfahren ferner umfasst:
wenn beim Empfangen eines vom Videosender gesendeten Videostreams vom MCVideo-Server eine Anforderung zur Beendigung des Sendens eines Videos empfangen wird, Überprüfen des Videosenders und der Anforderung zur Beendigung des Sendens eines Videos und Zurückgeben der Antwortnachricht, was das Senden der Beendigung an den Videosender nach erfolgreicher Überprüfung ermöglicht.

4. Verfahren zur Steuerung der Gruppenruf-Videoübertragung des eisenbahnbezogenen MCVideo-Systems nach Anspruch 1, wobei das Verfahren ferner umfasst:
Anzeigen der relevanten Informationen des Videosenders in einer Liste durch die anderen Benutzerterminals; wobei die relevanten Informationen des Videosenders einschließen: Benutzername, SSRC-Nummer und Funktionsnummer des Benutzerterminals;
anschließend, wenn ein neues Benutzerterminal dem Videogruppenanruf beitritt, Senden der relevanten Informationen des Videosenders an das neue Benutzerterminal; wenn eine vom Videosender gesendete Anfrage zur Beendigung des Sendens eines Videos vom MCVideo-Server empfangen wird, Ermöglichen des Beendens des Sendens des Videos durch den Videosender, oder, nachdem der Videosender den Videogruppenanruf beendet hat, Senden einer Benachrichtigung über die Beendigung des Sendens des Videos durch den MCVideo-Server an andere Benutzerterminals im Videogruppenanruf.

5. Verfahren zur Steuerung der Gruppenruf-Videoübertragung des eisenbahnbezogenen MCVideo-Systems nach Anspruch 1, wobei das Verfahren ferner umfasst:
wenn der Videostream des bezeichneten Videosenders vom MCVideo-Server an den Videoempfänger gesendet wird, falls die vom Videoempfänger gesendete Anforderung zur Beendigung des Empfangs empfangen wird, Überprüfen, durch den MCVideo-Server, des Videoempfängers und der Anforderung zur Beendigung des Empfangs des Videos und Zurückgeben, nach erfolgreicher Überprüfung, der Antwortnachricht, die die Beendigung des Empfangs ermöglicht, an den Videoempfänger.

6. Verfahren zur Steuerung der Gruppenruf-Videoübertragung des eisenbahnbezogenen MCVideo-Systems nach einem der Ansprüche 1 bis 5, wobei die oben genannte Anforderung zum Senden eines Videos und die relevanten Informationen des Videosenders alle die Funktionsnummer des Benutzerterminals verwenden, das dem Videosender entspricht;
das Funktionsnummernfeld des Benutzerterminals einschließt: Funktionsnummernfeld-ID, Funktionsnummernlänge und Funktionsnummer; die Funktionsnummernfeld-ID wird verwendet, um den Funktionsnummernfeldnamen zu kennzeichnen, die Funktionsnummernlänge wird verwendet, um die Länge der Funktionsnummer zu kennzeichnen, und die Funktionsnummer enthält den spezifischen Inhalt der Funktionsnummer.

7. Verfahren zur Steuerung der Gruppenruf-Videoübertragung des eisenbahnbezogenen MCVideo-Systems nach Anspruch 6, wobei die Anzahl der Funktionsnummern des oben genannten Benutzerterminals eins oder mehr beträgt und wenn die Anzahl größer als eins ist, nur die Funktionsnummer mit der höchsten Priorität verwendet wird;
die Prioritätsreihenfolge ist: Zugnummer-Funktionsnummer > Lokomotiv-Funktionsnummer > Wagennummer-Funktionsnummer > sonstige Funktionsnummer; wobei die anderen Funktionsnummern Funktionsnummern anderer Kategorien darstellen, mit Ausnahme der Zugnummer-Funktionsnummer, der Lokomotiv-Funktionsnummer und der Wagennummer-Funktionsnummer.

8. Verfahren zur Steuerung der Gruppenruf-Videoübertragung des eisenbahnbezogenen MCVideo-Systems nach einem der Ansprüche 1 bis 5, wobei das Verfahren ferner eine Strategie zur Verarbeitung von vom Videoempfänger empfangenen Mehrkanalvideos einschließt und die Verarbeitungsstrategie Folgendes einschließt:
Verteilen verschiedener SSRC-Nummern durch den MCVideo-Server an verschiedene Videosender, Unterscheiden der verschiedenen Videosender anhand der SSRC-Nummern und der Quellen verschiedener Videostreams anhand der SSRC-Nummern durch den Videoempfänger nach dem Empfang von Videostreams von den verschiedenen Videosendern.

9. Verfahren zur Steuerung der Gruppenruf-Videoübertragung des eisenbahnbezogenen MCVideo-Systems nach einem der Ansprüche 1 bis 5, wobei das Verfahren ferner einschließt:
wenn das Benutzerterminal im Videogruppenanruf zu mehreren MCVideo-Systemen gehört, wird das MCVideo-System, zu dem der Videogruppenanruf gehört, als Hauptsteuerungssystem und die anderen MCVideo-Systeme als teilnehmende Systeme betrachtet; den MCVideo-Server im Hauptsteuerungssystem als verantwortlich für den Empfang der Anforderung vom Videosender und einem Videosender in einem der beteiligten Systeme und für die Rückmeldung der entsprechenden Antwortnachricht nach der Berechtigungsüberprüfung zu übernehmen;
direkte Kommunikation des Videosenders im Hauptsteuerungssystem mit dem MCVideo-Server im Hauptsteuerungssystem und
Kommunikation des Videosenders im beteiligten System mit dem MCVideo-Server im Hauptsteuerungssystem über den MCVideo-Server im zugehörigen MCVideo-System.

## Revendications

1. Procédé destiné à une commande de transmission vidéo d'appel de groupe d'un système Mission Critical Video, MCVideo, ferroviaire, comprenant les étapes suivantes :
lorsqu'une demande d'enregistrement d'un terminal utilisateur est reçue par un serveur MCVideo, la configuration d'une autorisation correspondante pour le terminal utilisateur selon une catégorie du terminal utilisateur ; dans lequel un terminal utilisateur envoyant une vidéo dans un appel de groupe vidéo est appelé un expéditeur de vidéo, et un terminal utilisateur recevant une vidéo est appelé un récepteur de vidéo ;
lorsqu'une demande d'envoi de vidéo est reçue par le serveur MCVideo en provenance d'un expéditeur de vidéo, la vérification par le serveur MCVideo de l'expéditeur de vidéo et de la demande d'envoi de vidéo en combinaison avec l'autorisation correspondante de l'expéditeur de vidéo, le renvoi par le serveur MCVideo d'un message de réponse transportant un numéro de source de synchronisation, SSRC, distribué au flux vidéo de l'expéditeur de vidéo à l'expéditeur de vidéo après réussite de la vérification, et la réception par le serveur MCVideo du flux vidéo envoyé par l'expéditeur de vidéo ; en même temps, l'envoi par le serveur MCVideo d'informations pertinentes de l'expéditeur de vidéo à d'autres terminaux utilisateur dans l'appel de groupe vidéo où l'expéditeur de vidéo est localisé ;
lorsqu'une demande pour recevoir la vidéo de l'expéditeur de vidéo désigné est reçue par le serveur MCVideo en provenance d'un récepteur de vidéo, la vérification du récepteur de vidéo et de la demande de réception de vidéo en combinaison avec l'autorisation correspondante du récepteur de vidéo ; après réussite de la vérification, le renvoi d'un message de réponse d'autorisation de réception au terminal utilisateur, et l'envoi du flux vidéo de l'expéditeur de vidéo désigné au récepteur de vidéo.

2. Procédé destiné à une commande de transmission vidéo d'appel de groupe du système MCVideo ferroviaire selon la revendication 1, dans lequel la configuration de l'autorisation correspondante pour le terminal utilisateur selon la catégorie du terminal utilisateur comprend :
le terminal utilisateur est divisé en trois catégories, à savoir, un terminal mobile, un terminal fixe câblé et un équipement de surveillance ;
la limite supérieure de canaux vidéo qui peuvent être reçus par le terminal utilisateur de chaque catégorie est configurée, et séquentiellement les limites supérieures du terminal mobile, du terminal fixe câblé et de l'équipement de surveillance sont établies à N1, N2 et N3, et N2 > N1 > N3 ;
l'autorisation de visualisation de vidéos de chacun parmi les terminaux utilisateur de chaque catégorie est configurée, y compris le fait que le terminal utilisateur de la catégorie terminal mobile a l'autorisation de visualiser les vidéos des terminaux utilisateur d'autres catégories (y compris sa propre catégorie) à l'exception du terminal utilisateur de catégorie terminal fixe câblé, le terminal utilisateur de la catégorie terminal fixe câblé a l'autorisation de visualiser les vidéos du terminal utilisateur de toutes les catégories (y compris sa propre catégorie), et le terminal utilisateur de la catégorie équipement de surveillance n'a aucune autorisation de visualiser la vidéo d'un type quelconque de terminaux utilisateur.

3. Procédé destiné à une commande de transmission vidéo d'appel de groupe du système MCVideo ferroviaire selon la revendication 1, dans lequel le procédé comprend en outre :
dans le processus de réception d'un flux vidéo envoyé par l'expéditeur de vidéo, si la demande d'achèvement d'envoi de vidéo est reçue de l'expéditeur de vidéo par le serveur MCVideo, la vérification de l'expéditeur de vidéo et de la demande d'achèvement d'envoi de vidéo, et le renvoi du message de réponse permettant l'achèvement d'envoi à l'expéditeur de vidéo après réussite de la vérification.

4. Procédé destiné à une commande de transmission vidéo d'appel de groupe du système MCVideo ferroviaire selon la revendication 1, dans lequel le procédé comprend en outre :
l'affichage dans une liste des informations pertinentes de l'expéditeur de vidéo par les autres terminaux utilisateur ; dans lequel les informations pertinentes de l'expéditeur de vidéo comportent : le nom d'utilisateur du terminal utilisateur, un numéro SSRC et un numéro fonctionnel ;
après cela, lorsqu'un nouveau terminal utilisateur rejoint l'appel de groupe vidéo, l'envoi des informations pertinentes de l'expéditeur de vidéo au nouveau terminal utilisateur ; lorsqu'une demande d'achèvement d'envoi de vidéo envoyée par l'expéditeur de vidéo est reçue par le serveur MCVideo, le fait de permettre à l'expéditeur de vidéo d'achever l'envoi de vidéo, ou après que l'expéditeur de vidéo a quitté l'appel de groupe vidéo, l'envoi par le serveur MCVideo d'un avis d'achèvement d'envoi de vidéo à d'autres terminaux utilisateur dans l'appel de groupe vidéo.

5. Procédé destiné à une commande de transmission vidéo d'appel de groupe du système MCVideo ferroviaire selon la revendication 1, dans lequel le procédé comprend en outre :
lorsque le flux vidéo de l'expéditeur de vidéo désigné est envoyé par le serveur MCVideo au récepteur de vidéo, si la demande d'achèvement de réception envoyée par le récepteur de vidéo est reçue, la vérification par le serveur MCVideo du récepteur de vidéo et de la demande vidéo d'achèvement de réception, et le renvoi du message de réponse permettant l'achèvement de réception au récepteur de vidéo après que la vérification a réussi.

6. Procédé destiné à une commande de transmission vidéo d'appel de groupe du système MCVideo ferroviaire selon l'une quelconque des revendications 1 à 5, dans lequel la demande d'envoi de vidéo susmentionnée et les informations pertinentes de l'expéditeur de vidéo transportent toutes le numéro fonctionnel du terminal utilisateur correspondant à l'expéditeur de vidéo ;
le champ de numéro fonctionnel du terminal utilisateur comporte : un ID de champ de numéro fonctionnel, une longueur de numéro fonctionnel et un numéro fonctionnel ; l'ID de champ de numéro fonctionnel est utilisé pour marquer le nom de champ de numéro fonctionnel, la longueur de numéro fonctionnel est utilisée pour marquer la longueur du numéro fonctionnel, et le numéro fonctionnel contient le contenu spécifique du numéro fonctionnel.

7. Procédé destiné à une commande de transmission vidéo d'appel de groupe du système MCVideo ferroviaire selon la revendication 6, dans lequel le nombre de numéros fonctionnels du terminal utilisateur susmentionné est un ou plusieurs, et lorsque le nombre est supérieur à un, seul le numéro fonctionnel avec la priorité la plus élevée est transporté ;
l'ordre de priorité est : numéro fonctionnel de numéro de train > numéro fonctionnel de locomotive > numéro fonctionnel de numéro de wagon/voiture > autre numéro fonctionnel ; dans lequel, les autres numéros fonctionnels représentent des numéros fonctionnels d'autres catégories à l'exception du numéro fonctionnel de numéro de train, du numéro fonctionnel de locomotive et du numéro fonctionnel de numéro de wagon/voiture.

8. Procédé destiné à une commande de transmission vidéo d'appel de groupe du système MCVideo ferroviaire selon l'une quelconque des revendications 1 à 5, dans lequel le procédé comporte en outre une stratégie de traitement des vidéos multicanaux reçues par le récepteur de vidéo, et la stratégie de traitement comporte ce qui suit :
la distribution par le serveur MCVideo de différents numéros SSRC pour différents expéditeurs de vidéo, la distinction par le récepteur de vidéo des différents expéditeurs de vidéo selon les numéros SSRC, et des sources de différents flux vidéo selon le numéro SSRC après réception de flux vidéo en provenance des différents expéditeurs de vidéo.

9. Procédé destiné à une commande de transmission vidéo d'appel de groupe du système MCVideo ferroviaire selon l'une quelconque des revendications 1 à 5, dans lequel le procédé comporte en outre :
lorsque le terminal utilisateur dans l'appel de groupe vidéo appartient à de multiples systèmes MCVideo, le fait de prendre le système MCVideo auquel l'appel de groupe vidéo appartient en guise de système de commande principal, et le fait de prendre d'autres systèmes MCVideo en guise de systèmes participants ; le fait de prendre le serveur MCVideo dans le système de commande principal en guise de responsables de la réception de la demande provenant de l'expéditeur de vidéo et un expéditeur de vidéo dans l'un desdits systèmes participants, et de l'envoi en retour du message de réponse correspondant après la vérification d'autorisation ;
une communication directe de l'expéditeur de vidéo dans le système de commande principal avec le serveur MCVideo dans le système de commande principal, et
une communication de l'expéditeur de vidéo dans le système participant avec le serveur MCVideo dans le système de commande principal par le biais du serveur MCVideo dans le système MCVideo auquel il appartient.
